# EUROPEAN PATENT SPECIFICATION

(11) **EP 2 013 766 B1**
(45) Date of publication and mention of the grant of the patent: **12.09.2018**
(21) Application number: 07745822.2
(22) Date of filing: 05.04.2007
(51) Int. Cl.: G06F 21/10

(54) **METHOD FOR SHARING RIGHTS OBJECT IN DIGITAL RIGHTS MANAGEMENT AND DEVICE THEREOF**
VERFAHREN ZUM GEMEINSAMEN BENUTZEN EINES RECHTEOBJEKTS BEI DER DIGITALEN RECHTEVERWALTUNG UND EINRICHTUNG DAFÜR
PROCÉDÉ DE PARTAGE D'OBJET DE DROITS DANS UNE GESTION DE DROITS NUMÉRIQUES ET DISPOSITIF ASSOCIÉ

(30) Priority: 05.04.2006 KR 20060031142; 11.04.2006 KR 20060032978; 03.07.2006 KR 20060062220
(43) Date of publication of application: 14.01.2009
(73) Proprietor: LG Electronics Inc., Seoul 07336 (KR)
(72) Inventor: CHU, Youn-Sung, Seoul, 137-061 (KR); KIM, Te-Hyun, Gyeonggi-do, 431-734 (KR); KESHAVAMURTHY, Kiran Kumar, Gyeonggi-do, 431-058 (KR); LEE, Seung-Jae, Seoul, 151-022 (KR)
(74) Representative: Cabinet Plasseraud
(86) International application number: PCT/KR2007/001659
(87) International publication number: WO 2007/114657

(56) References cited:
- EP-A1- 0 715 246
- WO-A1-2004/055650
- KR-A- 20060 117 769
- US-A1- 2003 131 353
- US-A1- 2005 144 019
- OMA DIGITAL RIGHTS MANAGEMENT: "OMA Digital Rights Management, DRM Specification Version 2.0", DRM SPECIFICATION, XX, XX, 16 July 2004 (2004-07-16), page complete, XP002335532,
- "OMA DRM Requirements ; OMA-RD-DRM-V2_0-20060303-A", OMA-RD-DRM-V2_0-20060303-A, OPEN MOBILE ALLIANCE (OMA), 4330 LA JOLLA VILLAGE DR., SUITE 110 SAN DIEGO, CA 92122 ; USA, no. 2.0, 3 March 2006 (2006-03-03), pages 1-22, XP064123493, [retrieved on 2006-03-06]

## Description

### Technical Solution

This disclosure relates to a Digital Rights Management (DRM), and more particularly, to a method for sharing a Rights Object (RO) of a certain DRM content between devices.

A Digital Rights Management (DRM) refers to a system technology for safely protecting rights for digital contents and systematically managing them. The DRM provides a protecting and managing scheme for preventing an illegal copy of the content, acquiring DRM contents RO, and generating and transferring the content.

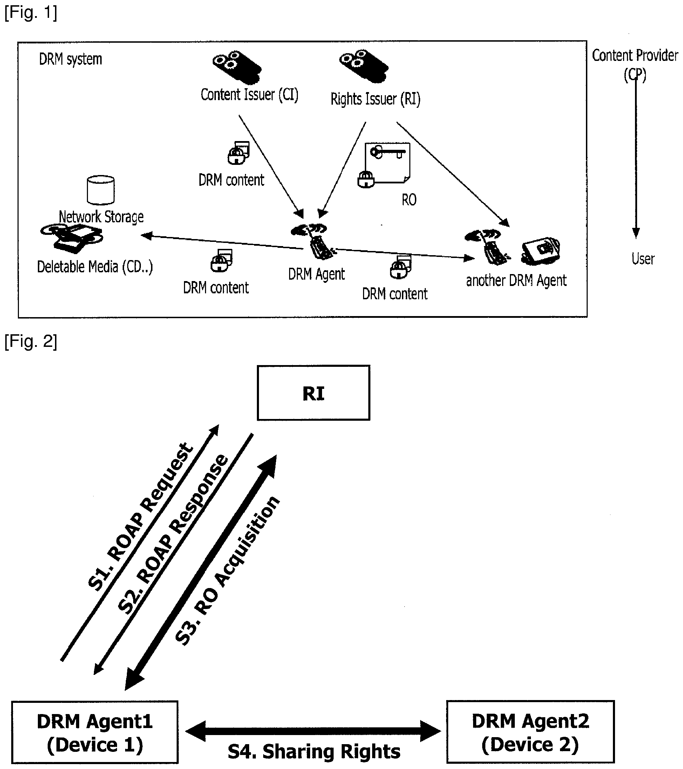

Fig. 1 illustrates a construction of a DRM system. The DRM system controls content issued to a user by a content provider to be used only in a right-limit of RO. Here, the content provider refers to an entity corresponding to a Content Issuer (CI) and/or a Rights Issuer (RI).

The CI issues a protected content (i.e., DRM content) using a particular encryption key so as to protect the content from users having no access right therefor, while the RI issues RO required to use the protected content.

A DRM agent is mounted (equipped with) in a terminal thus to receive the protected content and its RO. The DRM agent then analyzes 'permission' (license) included in the RO and thus changes the protected content into a format which is usable in the corresponding terminal, thereby controlling the use of the content. Here, the RO for the
DRM content may include various types of constraints which are employed when
using the corresponding DRM content, for example, 'count', 'interval' or 'system' related to using the corresponding DRM content.

The OMA Digital Rights Management specification entitled "OMA Digital Rights Management, DRM Specification Version 2.0", dated 16 July 2004, specifies the content formats, protocols, and a rights expression language for purposes of enabling the distribution and consumption of digital content in a controlled manner.

In the meantime, a user of a certain device having bought a RO for a certain DRM content may desire to share his RO (e.g., moving his RO or copying the RO) with unspecified users or a specified user (or another device). Here, in order for the user to share his RO with another user, the RO should be processed to be sharable in a certain manner.

Therefore, it is an object of this disclosure to provide a method for sharing a Rights Object (RO) for a DRM content between devices, and a device thereof.

To achieve the object of this disclosure, there are provided methods for sharing a rights object, RO, in digital rights management among multiple devices as set forth in the appended claims.

To achieve the object of this disclosure, a mobile terminal configured to share a rights object, RO, in digital rights management is provided as set forth in the appended claims.
Fig. 1 is a view of a construction of a DRM system.
Fig. 2 is a block diagram schematically illustrating an RO sharing between devices according to this disclosure.
Fig. 3 is a signal flowchart illustrating a method for sharing an RO between devices in accordance with a first embodiment of this disclosure.
Fig. 4 is an exemplary view illustrating XML schema of a Upgrade RO trigger in accordance with one embodiment of this disclosure.
Fig. 5 is an exemplary view illustrating XML schema of a ROAP request message in accordance with one embodiment of this disclosure.
Fig. 6 is an exemplary view illustrating XML schema of a ROAP response message in accordance with one embodiment of this disclosure.
Fig. 7 is a signal flowchart illustrating a method for sharing an RO between devices in accordance with a second embodiment of this disclosure .
Fig. 8 is an exemplary view illustrating another XML schema of the ROAP request message according to this disclosure.
Fig. 9 is a block diagram illustrating a device in accordance with this disclosure.

This disclosure may be applied to wired/wireless communications systems related to a Digital Rights Management (DRM). However, this disclosure may not be limited thereto, but be applicable to any type of DRM related systems and devices.

Hereinafter, configurations and operations in the preferred embodiments of this disclosure will be described with reference to the accompanying drawings.

This disclosure basically relates to sharing a Rights Object (RO) for DRM contents between a specified device and at least one or more other devices. First, the specified device requests a sever (e.g., RI or CI) to upgrade its existing RO (i.e., one or more RO belonging to the specified device), and moves or copy an upgraded RO according to the request to the at least one or more other devices via wired/wireless media. The specified device can accordingly share the upgraded RO with the at least one or more other devices.

Terms used in this disclosure will briefly be described as follows.

RO sharing may denote using or consuming an RO between devices (a specified device and other device(s)) in a manner of moving (transferring), copying or lending the RO from the specified device to another device(s). Also, the RO sharing denotes using of the RO under a certain constraint (e.g., interval, or count) between devices in a manner of moving (transferring) or copying the RO from a specified device to another devices(s). This is especially called 'Ad Hoc Sharing'.

RO upgrading may denote a type of authorization for an RO sharing (e.g., RO moving). For example, a specified device can share (e.g., move, copy or perform an Ad Hoc sharing for) an RO taken by the device or belonging to the device with at least one or more other devices by acquiring an RO having a move permission upgraded by the RI via a certain protocol (e.g., 2-pass updateRO protocol). Also, the RO upgrading may denote that a specified device upgrades an RO taken by itself into an appropriate format to share the RO with other devices. Accordingly, the RO may include permissions and/or constraints desired by a user. As such, the upgraded RO is acquired by processing the existing RO through the RO upgrading process by the RI or CI.

The terminal according to this disclosure may commonly denote a device, and may include all types of terminals capable of using digital contents. That is, terminals, namely, devices, according to this disclosure, may include mobile communications terminals (e.g., User Equipment (UE)) capable of using digital contents, mobile phones, cellular phones, DMB phones, DVB-H phones, PDA phones, PTT phones, etc.), digital TVs, GPS navigation, portable game machines, MP3, other home electronic or electrical alliances, etc. Thus, the terminal described in this disclosure may be the same as the device. In addition, the terminal of this disclosure may internally include a communication module, a Web/WAP browser, a DRM agent, media playback and library and a memory. In particular, the terminal (or device) of this disclosure may used as the same as the DRM agent for performing main functions.

ROs for DRM contents may be classified into stateful ROs and stateless ROs. The stateless RO indicates RO which a device does not manage state information. The stateful RO indicates RO which the device should manage state information such that permission and constraint indicated in the RO can appropriately be applied. The constraint managed by the state information may be interval, count, timed-count, accumulated, and the like.

Also, the state information may denote information related to remaining RO to be further usable, and one state information is managed for each stateful RO. For example, the state information can be managed depending on count or time, or depending on remaining count, or remaining time.

A connected device may denote a device capable of being directly connected to an RI (or CI) via a wired or wireless connection. An unconnected device may denote a device not capable of being directly connected to the RI.

Fig. 2 is a block diagram schematically illustrating an RO sharing between devices according to this disclosure. Here, at least one or more devices 2 sharing an RO with a device 1 in Fig. 2 may be employed, but only one device 2 is employed in the one embodiment of this disclosure for the sake of brief description thereof.

This disclosure may conceptually briefly be explained with reference to Fig. 2 as follows.

In this disclosure, in order for a specified device (e.g., device 1) to share an RO belonging to itself with at least one or more other devices (e.g., device 2), the device 1 may request an RI to upgrade its RO (e.g., request using a ROAP Request message) (S1). That is, the device 1 may request the RI to upgrade the RO by adding permission and/or constraint for sharing the RO with the device 2 to the RO. Here, the RO taken by the device 1 has been issued from the RI.

The RI may send a ROAP based response message (indicated as ROAP Response in Fig. 2) to the device 1 with respect to the request of the step S1. That is, the RI may add permission (e.g., move permission) and/or constraint to the RO or may change the permission and/or constraint, and then may inform the device 1 of the added or changed result (S2).

The device 1 may receive an upgraded RO issued by the RI via a ROAP based message through the steps S1 and S2 (S3). For example, the device 1 may receive the upgraded RO issued by the RI through ROAP-RO Request message and ROAP-RO Response message via DRM 2.0 RO Acquisition Protocol. On the other hand, the protocol in the step S3 may be referred to as 2-pass RO Acquisition Protocol.

The device 1 may move or copy the upgraded RO acquired through the steps S1 to S3 to the device 2. Accordingly, the RO can be shared between the device 1 and the device 2 (S4). Here, the RO sharing may indicate, for example, copying, moving or Ad Hoc Sharing of the RO.

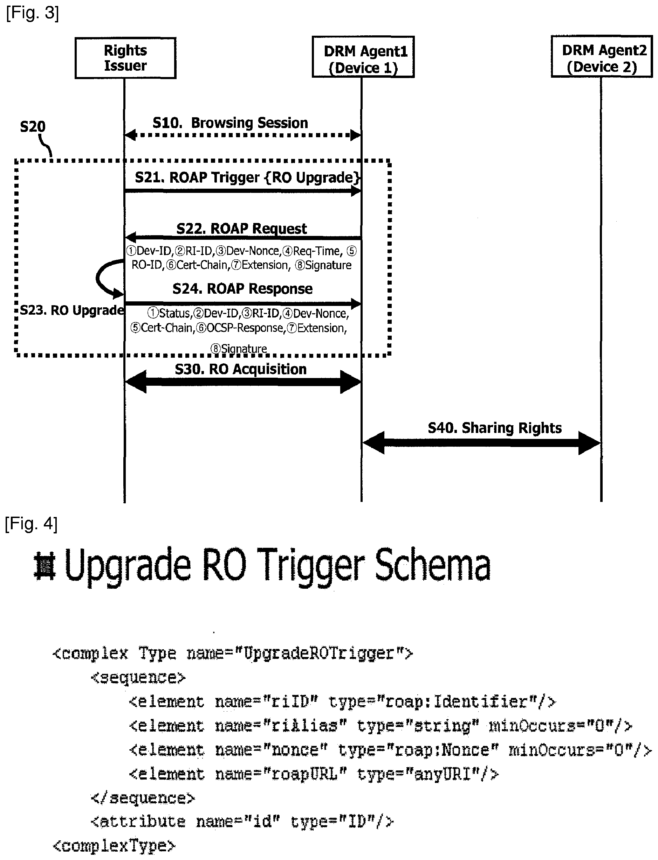

Fig. 3 is a signal flowchart illustrating a method for sharing an RO between devices in accordance with a first embodiment of this disclosure. In Fig. 3, the block diagram illustrated in Fig. 2 is described in more detail. However, the device 1 may denote a device used by a user 1 and the device 2 may denote a device used by a user 2. A specific RO which the user 1 desires to share may correspond to a specific RO among a plurality of ROs taken by the device 1 (or DRM agent 1, and referred to as 'DRM agent 1' hereafter) of the user 1, and the user 1 has already purchased the specific RO from an RI (or CI).

As illustrated in Fig. 3, the first embodiment of this disclosure may include a preparation step (S20) in which a DRM agent 1 is intended to upgrade an RO belonging to itself by exchanging messages with the RI, an acquisition step (S30) in which the DRM agent 1 substantially acquires an upgraded RO from the RI, and a sharing step (S40) in which the DRM agent 1 shares the upgraded RO with another device (i.e., device 2 in Fig. 3) (e.g., moves the upgraded RO to the another device). Hereinafter, description of the first embodiment will be made in detail with reference to Fig. 3.

In order for the user 1 to share a previously-purchased RO with other users using other devices (e.g., another device belonging to him or a third party's device), the RO should be upgraded. That is, the user 1 may access a portal web site of a Contents Issuer (CI) (or RI) by using the device 1. The user 1 then may select at least one or more permissions (e.g., permission for move, Ad Hoc sharing, copy, etc.) and/or constraints (e.g., count or time) that the user 1 desires. The user 1 then may request to upgrade the specific RO such that the RO taken by the device 1 includes (adds) the selected at least one or more permissions and/or constraints (S10). The step 10 may be optional.

After the step S10, a series of steps (S20) for upgrading the RO may be performed between the DRM agent 1 and the RI.

That is, the RI may send a ROAP Trigger message (or signal) for the RO upgrading to the DRM agent 1, the ROAP Trigger message informing that a protocol for the RO upgrading is to be performed (S21). Here, in the step S21, the DRM agent 1 may download the ROAP Trigger message in a XML schema format as illustrated in Fig. 4, and then may perform the following steps (i.e., S22 and S23).

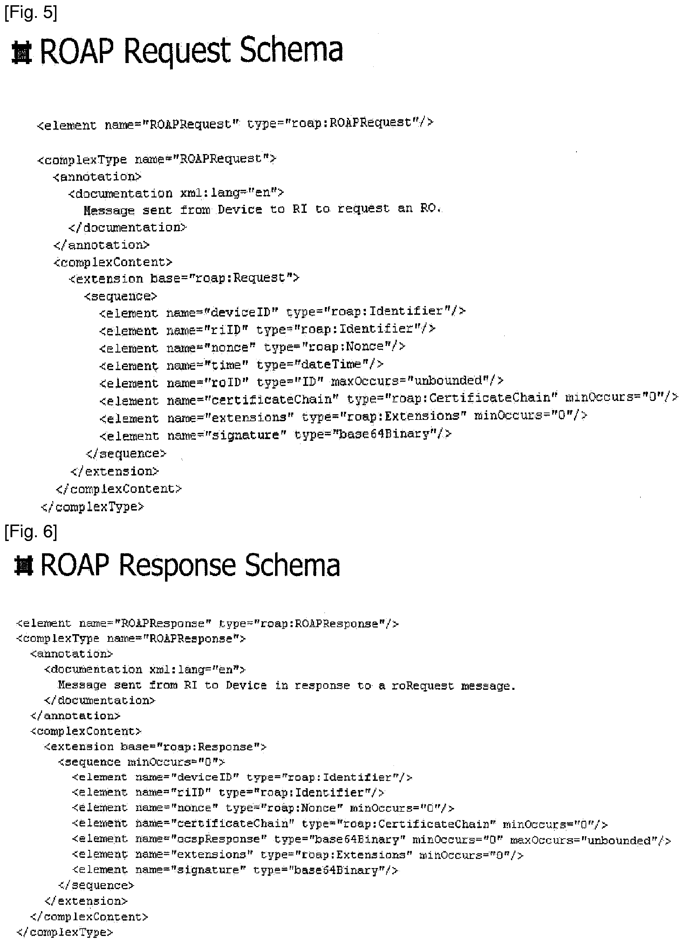

The DRM agent 1 may request the RI to upgrade a previously-issued specific RO in order to share it with the DRM agent 2 (i.e. device 2) (S22). Here, the upgrading of the specific RO indicates that the DRM agent 1 adds, for example, permissions and/or constraints to the specific RO. On the other hand, one example of the XML schema format of the upgrade request message (i.e., ROAP Request in Fig. 3) may be illustrated in Fig. 5.

In the step S22, the DRM agent 1 may send a so-called upgrade request message (i.e., 'ROAP Request' message in Fig. 3) to the RI to request the RO upgrading. Here, the upgrade request message, as illustrated in Fig. 5, may include at least one or more information related to the RO upgrading. These information may be types of parameters or elements, example of which may be as follows:
① Dev-ID : Device Identification (ID) of the DRM agent 1;
② RI-ID : ID of the RI;
③ Dev-Nonce : Random value generated by the DRM agent 1;
④ Req-Time : current DRM Time;
⑤ RO-ID : Identification of RO to be upgraded;
⑥ Cert-Chain : Certificate chain including a device certificate;
⑦ Extension : Parameter for extension, which may include PKI(Peer Key Identifier, No OCSP Response, OCSP Responder Key Identifier, Transaction Identifier and the like; and
⑧ Signature : RSA Digital Signature for a message.

Here, the Cert-chain among those information may be optional.

The RI may receive the ROAP Request message from the DRM agent 1, and interpret (or analyzes) information included in the message, thereby upgrading the specific RO identified by the RO-ID (S23). That is, the RI may add the items (permissions and/or constraints) upgrading-requested by the user 1 in the step S10 to the specific RO, thereby upgrading the RO.

One example of the XML schema format of the ROAP response message may be illustrated in Fig. 6.

The RI may send a response message (e.g. ROAP Response message in Fig. 3) to the DRM agent 1 with respect to the ROAP request message of the step S22 (S24). Here, the ROAP Response message may include at least one or more information indicating the result of the upgrading request. These information may be included in the response message as parameters or elements as illustrated in Fig. 6, example of which is described as follows:
① Status : Result of the RO upgrade through the ROAP Request of the DRM agent 1;
② Dev-ID : Device Identification (ID) of the DRM agent 1;
③ RI-ID : ID of the RI;
④ Dev-Nonce : Random value of the DRM agent 1;
⑤ Cert-Chain : Certificate chain of the device certificate;
⑥ OCSP-Response (optional): OCSP Response with respect to the Cert-chain of the RI;
⑦ Extention : Parameter for extension, which may include PKI(Peer Key Identifier, No OCSP Response, OCSP Responder Key Identifier, Transaction Identifier and the like); and
⑧ Signature : RSA Digital Signature for a message.

Here, the 'Cert-chain' among those information may be optional. Also, the status element (or parameter) may include 'accept' or 'reject' information for the RO upgrading request of the DRM agent 1, and may further include status information related to the RO upgrading. If the RI can not accept the RO-upgrading request of the DRM agent 1, the status element may have a type of error message (or signal) to be sent from the RI to the DRM agent 1. Accordingly, the user 1 can check the information (i.e., the error message) included in the status element of the ROAP Response message and then be informed that the RO can not be upgraded. Besides, the status element may include status information related to the RO upgrading.

The RI may issue the RO upgraded by the RI to the DRM agent 1 (S30).

The DRM agent 1 can share the upgraded RO acquired through the step S30 with the device 2, namely, the DRM agent 2 (S40). For example, when the DRM agent 1 moves the upgraded RO to the DRM agent 2, the DRM agent 2 may use the upgraded RO. In addition, when the DRM agent 1 moves the upgraded RO to the DRM agent 2 for an Ad Hoc Sharing, the DRM agent 1 may use the upgraded RO together with the DRM agent 2 temporarily or for a certain period. Besides, the DRM agent 1 can share the upgraded RO with the DRM agent 2 by copying it into the DRM agent 2.

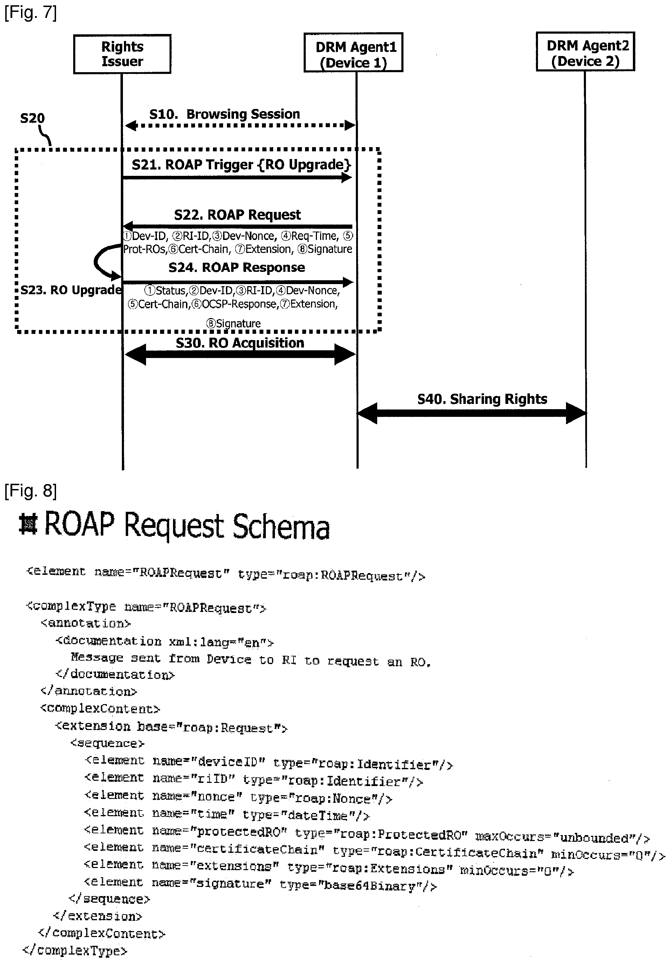

Fig. 7 is a signal flowchart illustrating a method for sharing an RO between devices in accordance with a second embodiment of the present invention. Fig. 7 illustrates the block diagram of Fig. 2 in more detail. The second embodiment of Fig. 7 is similar to the first embodiment of Fig. 3, except for the upgrade request message sent from the DRM agent 1 to the RI. Therefore, the same reference numerals in Figs. 3 and 7 indicate equivalent operations and functions. Also, the explanation of the first embodiment of Fig. 3 is equally applied to the second embodiment of Fig. 7.

In the second embodiment of Fig. 7, the upgrade requesting message (i.e., ROAP Request message in Fig. 8) sent from the DRM agent 1 to the RI has Prot-ROs as one information (indicated as 'protectedRO' in Fig. 8) instead of the RO-ID which is included in the upgrade requesting message in the first embodiment of Fig. 3. That is, comparing with the upgrade requesting message in the step S22 of Fig. 3, the upgrade requesting message illustrated in the step S22 in Fig. 7 (i.e., 'ROAP Request' message in Fig. 7) may include at least one or more information related to the RO upgrading. These information may be types of parameters or elements, example of which may be as follows:
① Dev-ID : Device Identification (ID) of the DRM agent 1;
② RI-ID : ID of the RI;
③ Dev-Nonce : Random value generated by the DRM agent 1;
④ Req-Time : current DRM Time;
⑤ Prot-ROs : issued to the DRM agent 1 by the RI, and in a format of <protectedRO > element;
⑥ Cert-Chain : Certificate chain including a device certificate;
⑦ Extension : Parameter for extension, which may include PKI(Peer Key Identifier, No OCSP Response, OCSP Responder Key Identifier, Transaction Identifier and the like; and
⑧ Signature : RSA Digital Signature for a message.

Here, the Prot-ROs as one information may have been issued to the DRM agent 1 by the RI. The Pro-ROs may be configured in a format of <protectedRO> element (or parameter) as in the XML schema format illustrated in Fig. 8. Also, the Prot-ROs may include a <rights> element, a digital signature for the <rights> element and REK. Here, the <rights> element may include CEK (Content Encryption Key), permission, constraint, and the like. In other words, a protected RO may be configured to contain RO, digital signature and REK.

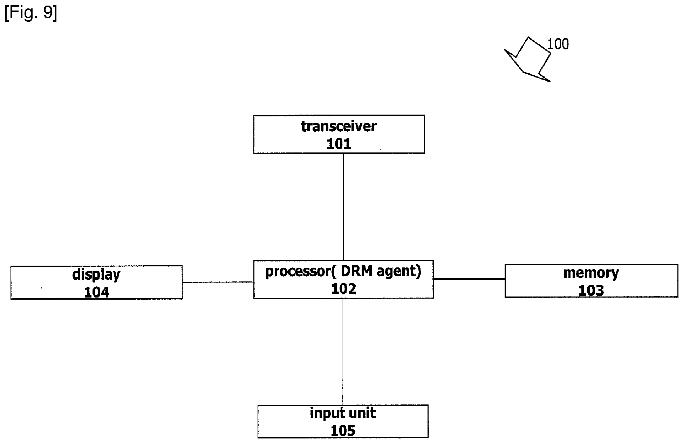

Hereinafter, a device (or terminal) according to this disclosure may be described with reference to Fig. 9 as follows. The device according to this disclosure may have the DRM agent illustrated with reference to Figs. 2 to 8. That is, the device 100 according to this disclosure may include a transceiver 101 which sends a message for requesting an RO upgrading (or updating) (e.g., ROAP Request) to the RI (or CI), and receives a response message (e.g., ROAP Response) from the RI with respect to the RO-upgrading request.

The device 100 according to this disclosure may further include a processor 102 which includes (adds) information related to the RO upgrading in the RO-upgrading requesting message, and analyzes information included in the response message received from the RI. The processor 102 may correspond to the DRM agent. Also, the processor 102 performs 2-pass RO acquisition protocol to acquire an upgraded RO from the RI.

The device 100 according to this disclosure may further include a memory 103 which stores the upgraded RO acquired from the RI.

The device 100 according to this disclosure may further include a display 104 which displays permissions and/or constraints to be added to the RO for the RO sharing upon accessing and browsing a portal site of the RI. The device 100 according to this disclosure may further include an input unit 105 which allows a user to select his desirable permission and/or constraint from the permissions and/or constraints displayed on the display.

In addition, function and operation of each component of the device 100 according to this disclosure can be understood by the description made with reference to Figs. 2 to 8.

However, in addition to the components illustrated in Fig. 9, the device 100 according to this disclosure may comprise essential components of a device (i.e., terminal) required to use DRM contents, which is obvious to those skilled in the art. Thus, description of the essential components will be omitted.

As described above, this disclosure has been explained with reference to the embodiments which are merely exemplary. It will be apparent to those skilled in the art that various modifications and variations can be made in this disclosure. For example, the messages (i.e., ROAP Request and ROAP Response) exchanged between the RI and the DRM agent 1 (or device 1) for the RO upgrading is for the RO acquisition. However, the ROAP Response message may include the RO upgraded by the RI to be sent from the RI to the DRM agent 1 (or device 1). Thus, it is intended that this disclosure cover modifications and variations of this invention provided they come within the scope of the appended claims and their equivalents.

As described above, in the method and device for sharing an RO between devices of this disclosure, a certain device requests the RI to upgrade an RO taken by the device, and accordingly the upgraded RO can be shared between the certain device and other device(s).

## Claims

1. A mobile terminal configured to share a rights object, RO, in digital rights management, the mobile terminal comprising:
a transceiver configured to send and receive information;
a processor cooperating with the transceiver and configured to:
send via the transceiver a RO upgrade request to a rights issuer, RI, which issued the RO existing in the mobile terminal, to request the RO to be upgraded in order to share the RO with at least one device, wherein the RO upgrade request comprises information on the RO and information on permission and/or constraint(s) desired by a user of the mobile terminal for an upgraded-RO;
if the RO upgrade request is successfully processed by the RI, receive, via the transceiver from the RI, a RO upgrade response containing the upgraded-RO and upgraded permission and/or constraint(s) generated based on the RO upgrade request, and
wherein the processor is configured to:
if the RO upgrade response includes a move permission for the upgraded-RO, directly move the upgraded-RO to the at least one device.

2. The mobile terminal of claim 1, wherein the RO upgrade request comprises information related to identification of the RO to be upgraded or comprises information related to protection of the RO to be upgraded.

3. The mobile terminal of claim 1, wherein the transceiver and the processor are configured to support Rights Object Acquisition Protocol, and the processor is a digital rights management agent.

4. The mobile terminal of claim 1, whereby the processor is further configured to cooperate with a display and an input unit,
the display to display information for setting permissions and/or constraints for the upgraded RO, and
the input unit to allow the user to select the permissions and/or constraints for the upgraded RO via the display.

5. The mobile terminal of claim 1, wherein the transceiver receives a trigger from the RI indicating that the RO upgrade request should be sent.

6. The mobile terminal of claim 1, wherein the processor installs the received upgraded - RO to allow digital rights management contents to be used.

7. The mobile terminal of claim 1, wherein the RO upgrade request comprises at least one of:
Dev-ID: identification of a device;
RI-ID: identification of the rights issuer;
Dev-Nonce: random value generated by a device;
Req-Time: current digital rights management time;
RO-ID: identification of the RO to be upgraded;
Cert-Chain: certificate chain including a device certificate;
Extension: a parameter for extension comprising a Peer Key Identifier, a No OCSP Response, a OCSP Responder Key Identifier, a Transaction Identifier; and
Signature: digital signature for the RO upgrade request.

8. The mobile terminal of claim 1, wherein the processor and the transceiver cooperate to allow the at least one device to share the upgraded RO by moving, transferring, copying or lending the upgraded RO to the at least one device such that digital rights management contents are shared with the at least one device.

9. A method of sharing a rights object, RO, in digital rights management among multiple devices, the method comprising:
sending a RO upgrade request to a rights issuer, RI, which issued an RO existing in the mobile terminal, to request the RO to be upgraded in order to share the RO with at least one device, wherein the RO upgrade request comprises information on the RO and information on permission and/or constraint(s) desired by a user of the mobile terminal for an upgraded- RO; and
if the RO upgrade request is successfully processed by the RI, receiving, from the RI, a RO upgrade response containing the upgraded-RO and upgraded permission and/or constraint(s) generated based on the RO upgrade request, and
wherein the method further comprises:
if the RO upgrade response includes a move permission for the upgraded-RO, directly moving the upgraded-RO to the at least one device.

10. The method of claim 9, wherein the sending of the RO upgrade request is initiated by a RO upgrade trigger sent from the RI.

11. A method of sharing a rights object, RO, in digital rights management among multiple devices, the method performed by a rights issuer, RI, which issued an RO existing in a first device and comprising:
receiving, from the first device, a RO upgrade request requesting the RO to be upgraded in order to share the RO with at least one device, wherein the RO upgrade request comprises information on the RO and information on permission and/or constraint(s) desired by a user of the first device for an upgraded-RO; and
processing the RO upgrade request to generate the upgraded- RO; and
if the RO upgrade request is successfully processed by the RI, sending, to the first device, a RO upgrade response containing the upgraded-RO and upgraded permission and/or constraint(s) generated based on the RO upgrade request,
wherein if the RO upgrade response includes a move permission for the upgraded-RO, the first device is configured to directly move the upgraded-RO to the at least one device.

12. The method of claim 11, further comprising:
sending a RO upgrade trigger that initiates the first device to send the RO upgrade request.

## Patentansprüche

1. Mobiles Endgerät, das zum gemeinsamen Benutzen eines Rechteobjekts, RO, bei der digitalen Rechteverwaltung konfiguriert ist, wobei das mobile Endgerät umfasst:
einen Sendeempfänger, der zum Senden und Empfangen von Informationen konfiguriert
ist;
einen Prozessor, der mit dem Sendeempfänger zusammenarbeitet und zu Folgendem konfiguriert ist:
Senden einer RO-Erweiterungsanforderung über den Sendeempfänger an einen Rechteausteller, RI, der das im mobilen Endgerät vorhandene RO ausgestellt hat, um eine Erweiterung des RO anzufordern, um das RO mit mindestens einer Vorrichtung gemeinsam zu benutzen, wobei die RO-Erweiterungsanforderung Informationen über das RO und Informationen über eine Berechtigung und/oder Einschränkung(en) umfasst, die von einem Benutzer der mobilen Endgerät für ein erweitertes RO gewünscht werden;
wenn die RO-Erweiterungsanforderung vom RI erfolgreich verarbeitet ist, Empfangen einer RO-Erweiterungsantwort, die das erweiterte RO und eine erweiterte Berechtigung und/oder Einschränkung(en) enthält, die basierend auf der RO-Erweiterungsanforderung erzeugt wurden, über den Sendeempfänger vom RI, und
wobei der Prozessor zu Folgendem konfiguriert ist:
wenn die RO-Erweiterungsantwort eine Bewegungsberechtigung für das erweiterte RO beinhaltet, direktes Bewegen des erweiterten RO zu der mindestens einen Vorrichtung.

2. Mobiles Endgerät nach Anspruch 1, wobei die RO-Erweiterungsanforderung Informationen umfasst, die die Kennung des zu erweiternden RO betreffen, oder Informationen umfasst, die den Schutz des zu erweiternden RO betreffen.

3. Mobiles Endgerät nach Anspruch 1, wobei der Sendeempfänger und der Prozessor zum Unterstützen des Rights Object Acquisition Protocol konfiguriert sind und der Prozessor ein Agent der digitalen Rechteverwaltung ist.

4. Mobiles Endgerät nach Anspruch 1, wobei der Prozessor ferner zur Zusammenarbeit mit einer Anzeige und einer Eingabeeinheit konfiguriert ist,
wobei die Anzeige Informationen zum Einstellen von Berechtigungen und/oder Einschränkungen für das erweiterte RO anzeigt, und
die Eingabeeinheit dem Benutzer die Auswahl der Berechtigungen und/oder Einschränkungen für das erweiterte RO über die Anzeige ermöglicht.

5. Mobiles Endgerät nach Anspruch 1, wobei der Sendeempfänger einen Auslöser vom RI empfängt, der angibt, dass die RO-Erweiterungsanforderung gesendet werden soll.

6. Mobiles Endgerät nach Anspruch 1, wobei der Prozessor das empfangene erweiterte RO installiert, um die Nutzung von Inhalten der digitalen Rechteverwaltung zu ermöglichen.

7. Mobiles Endgerät nach Anspruch 1, wobei die RO-Erweiterungsanforderung mindestens eines des Folgenden umfasst:
Dev-ID: Kennung einer Vorrichtung;
RI-ID: Kennung des Rechteausstellers;
Dev-Nonce: Zufallswert, der von einer Vorrichtung erzeugt wird;
Req-Time: aktuelle Verwaltungszeit digitaler Rechte;
RO-ID: Kennung des zu erweiternden RO;
Cert-Chain: Zertifikatskette mit einem Vorrichtungszertifikat;
Extension: ein Erweiterungsparameter, umfassend eine Peer-Schlüssel-Kennung, eine Nicht-OCSP-Antwort, eine OCSP-Schlüsselkennung des Responders, eine Transaktionskennung; und
Signatur: digitale Signatur für die RO-Erweiterungsanforderung.

8. Mobiles Endgerät nach Anspruch 1, wobei der Prozessor und der Sendeempfänger zusammenarbeiten, um es der mindestens einen Vorrichtung zu ermöglichen, das erweiterte RO gemeinsam zu nutzen, indem das erweiterte RO zu der mindestens einen Vorrichtung bewegt, übermittelt, kopiert oder an sie verliehen wird, so dass der Inhalt der digitalen Rechteverwaltung mit der mindestens einen Vorrichtung gemeinsam benutzt werden.

9. Verfahren zum gemeinsamen Benutzen eines Rechteobjekts, RO, bei der digitalen Rechteverwaltung durch mehrere Vorrichtungen, wobei das Verfahren umfasst:
Senden einer RO-Erweiterungsanforderung über den Sendeempfänger an einen Rechteausteller, RI, der das im mobilen Endgerät vorhandene RO ausgestellt hat, um eine Erweiterung des RO anzufordern, um das RO mit mindestens einer Vorrichtung gemeinsam zu benutzen, wobei die RO-Erweiterungsanforderung Informationen über das RO und Informationen über eine Berechtigung und/oder Einschränkung(en) umfassen, die von einem Benutzer der mobilen Endgerät für ein erweitertes RO gewünscht werden; und
wenn die RO-Erweiterungsanforderung vom RI erfolgreich verarbeitet ist, Empfangen einer RO-Erweiterungsantwort, die das erweiterte RO und eine erweiterte Berechtigung und/oder Einschränkung(en) enthält, die basierend auf der RO-Erweiterungsanforderung erzeugt wurden, über den Sendeempfänger vom RI, und
wobei das Verfahren ferner umfasst:
wenn die RO-Erweiterungsantwort eine Bewegungsberechtigung für das erweiterte RO beinhaltet, direktes Bewegen des erweiterten RO zu der mindestens einen Vorrichtung.

10. Verfahren nach Anspruch 9, wobei das Senden der RO-Erweiterungsanforderung durch einen vom RI gesendeten RO-Erweiterungsauslöser initiiert wird.

11. Verfahren zum gemeinsamen Benutzen eines Rechteobjekts, RO, bei der digitalen Rechteverwaltung durch mehrere Vorrichtungen, wobei das Verfahren von einem Rechteaussteller, RI, der ein in einer ersten Vorrichtung vorliegendes RO ausgestellt hat, durchgeführt wird und umfasst:
Empfangen einer RO-Erweiterungsanforderung, die eine Erweiterung des RO anfordert, um das RO mit mindestens einer Vorrichtung gemeinsam zu benutzen, von der ersten Vorrichtung, wobei die RO-Erweiterungsanforderung Informationen über das RO umfasst und Informationen über eine Berechtigung und/oder Einschränkung(en) umfasst, die von einem Benutzer der ersten Vorrichtung für ein erweitertes RO gewünscht werden; und
Verarbeiten der RO-Erweiterungsanforderung, um das erweiterte RO zu erzeugen; und
wenn die RO-Erweiterungsanforderung vom RI erfolgreich verarbeitet ist, Senden einer RO-Erweiterungsantwort, die das erweiterte RO und eine erweiterte Berechtigung und/oder Einschränkung(en) enthält, die basierend auf der RO-Erweiterungsanforderung erzeugt werden, an die erste Vorrichtung,
wobei, wenn die RO-Erweiterungsantwort eine Bewegungsberechtigung für das erweiterte RO beinhaltet, die erste Vorrichtung zum direkten Bewegen des erweiterten RO zu der mindestens einen Vorrichtung konfiguriert ist.

12. Verfahren nach Anspruch 11, ferner umfassend:
Senden eines RO-Erweiterungsauslösers, der initiiert, dass die erste Vorrichtung die RO-Erweiterungsanforderung sendet.

## Revendications

1. Terminal mobile configuré pour partager un objet de droits, RO, dans une gestion de droits numériques, le terminal mobile comprenant :
un émetteur-récepteur configuré pour envoyer et recevoir des informations ;
un processeur coopérant avec l'émetteur-récepteur et configuré pour :
envoyer par le biais de l'émetteur-récepteur une demande de mise à niveau de RO à un émetteur de droits, RI, qui a émis le RO existant dans le terminal mobile, pour demander que le RO soit mis à niveau de manière à partager le RO avec au moins un dispositif, dans lequel la demande de mise à niveau de RO comprend des informations sur le RO et des informations sur une autorisation et/ou une ou des contraintes désirées par un utilisateur du terminal mobile pour un RO mis à niveau ;
si la demande de mise à niveau de RO est traitée avec succès par le RI, recevoir, par le biais de l'émetteur-récepteur en provenance du RI, une réponse de mise à niveau de RO contenant le RO mis à niveau et l'autorisation et/ou la ou les contraintes mises à niveau générées sur la base de la demande de mise à niveau de RO, et
dans lequel le processeur est configuré pour :
si la réponse de mise à niveau de RO comprend une autorisation de déplacement pour le RO mis à niveau, déplacer directement le RO mis à niveau à l'au moins un dispositif.

2. Terminal mobile selon la revendication 1, dans lequel la demande de mise à niveau de RO comprend des informations relatives à une identification du RO à mettre à niveau ou comprend des informations relatives à une protection du RO à mettre à niveau.

3. Terminal mobile selon la revendication 1, dans lequel l'émetteur-récepteur et le processeur sont configurés pour supporter un protocole d'acquisition d'objets de droits, et le processeur est un agent de gestion de droits numériques.

4. Terminal mobile selon la revendication 1, moyennant quoi le processeur est configuré en outre pour coopérer avec un dispositif d'affichage et une unité d'entrée, le dispositif d'affichage étant adapté pour afficher des informations pour établir des autorisations et/ou des contraintes pour le RO mis à niveau, et
l'unité d'entrée étant adaptée pour permettre à l'utilisateur de sélectionner les autorisations et/ou les contraintes pour le RO mis à niveau par le biais du dispositif d'affichage.

5. Terminal mobile selon la revendication 1, dans lequel l'émetteur-récepteur reçoit un déclencheur en provenance du RI, indiquant que la demande de mise à niveau de RO devrait être envoyée.

6. Terminal mobile selon la revendication 1, dans lequel le processeur installe le RO mis à niveau reçu pour permettre d'utiliser des contenus de gestion de droits numériques.

7. Terminal mobile selon la revendication 1, dans lequel la demande de mise à niveau de RO comprend au moins un parmi :
Dev-ID : identification d'un dispositif ;
RI-ID : identification de l'émetteur de droits ;
Dev-Nonce : valeur aléatoire générée par un dispositif ;
Req-Time : temps de gestion actuel de droits numériques ;
RO-ID : identification du RO à mettre à niveau ;
Cert-Chain : chaine de certificats comprenant un certificat de dispositif ;
Extension : un paramètre pour une extension comprenant un identificateur de clé de pair, une réponse No OCSP, un identificateur de clé de répondeur OCSP, un identificateur de transaction ; et
Signature : une signature numérique pour la demande de mise à niveau de RO.

8. Terminal mobile selon la revendication 1, dans lequel le processeur et l'émetteur-récepteur coopèrent pour permettre à l'au moins un dispositif de partager le RO mis à niveau en déplaçant, transférant, copiant ou prêtant le RO mis à niveau à l'au moins un dispositif de manière que des contenus de gestion de droits numériques soient partagés avec l'au moins un dispositif.

9. Procédé de partage d'un objet de droits, RO, dans une gestion de droits numériques entre une multiplicité de dispositifs, le procédé comprenant :
l'envoi d'une demande de mise à niveau de RO à un émetteur de droits, RI, qui a émis un RO existant dans le terminal mobile, pour demander que le RO soit mis à niveau de manière à partager le RO avec au moins un dispositif, dans lequel la demande de mise à niveau de RO comprend des informations sur le RO et des informations sur une autorisation et/ou une ou des contraintes désirées par un utilisateur du terminal mobile pour un RO mis à niveau ; et
si la demande de mise à niveau de RO est traitée avec succès par le RI, la réception, en provenance du RI, d'une réponse de mise à niveau de RO contenant le RO mis à niveau et l'autorisation et/ou la ou les contraintes mises à niveau générées sur la base de la demande de mise à niveau de RO, et
dans lequel le procédé comprend en outre :
si la réponse de mise à niveau de RO comprend une autorisation de déplacement pour le RO mis à niveau, le déplacement direct du RO mis à niveau à l'au moins un dispositif.

10. Procédé selon la revendication 9, dans lequel l'envoi de la demande de mise à niveau de RO est initié par un déclencheur de mise à niveau de RO envoyé depuis le RI.

11. Procédé de partage d'un objet de droits, RO, dans une gestion de droits numériques entre une multiplicité de dispositifs, le procédé étant effectué par un émetteur de droits, RI, qui émet un RO existant dans un premier dispositif et comprenant :
la réception, par le premier dispositif, d'une demande de mise à niveau de RO demandant que le RO soit mis à niveau de manière à partager le RO avec au moins un dispositif, dans lequel la demande de mise à niveau de RO comprend des informations sur le RO et des informations sur une autorisation et/ou une ou des contraintes désirées par un utilisateur du premier dispositif pour un RO mis à niveau ; et
le traitement de la demande de mise à niveau de RO pour générer le RO mis à niveau ; et
si la demande de mise à niveau de RO est traitée avec succès par le RI, l'envoi, au premier dispositif, d'une réponse de mise à niveau de RO contenant le RO mis à niveau et l'autorisation et/ou la ou les contraintes mises à niveau générées sur la base de la demande de mise à niveau de RO,
dans lequel, si la réponse de mise à niveau de RO comprend une autorisation de déplacement pour le RO mis à niveau, le premier dispositif est configuré pour déplacer directement le RO mis à niveau à l'au moins un dispositif.

12. Procédé selon la revendication 11, comprenant en outre :
l'envoi d'un déclencheur de mise à niveau de RO qui initie l'envoi par le premier dispositif de la demande de mise à niveau de RO.
